(19) Europäisches Patentamt
European Patent Office
Office européen des brevets

(11) **EP 2 124 326 B1**

(12) **FASCICULE DE BREVET EUROPEEN**

(45) Date de publication et mention
de la délivrance du brevet:
**11.01.2017 Bulletin 2017/02**

(51) Int Cl.:
***H02M 7/06*** *(2006.01)*     ***H02H 9/02*** *(2006.01)*

(21) Numéro de dépôt: **09160300.1**

(22) Date de dépôt: **14.05.2009**

(54) **SYSTÈME D'ALIMENTATION ÉLECTRIQUE DE TYPE CAPACITIF**

KAPAZITIVES ENERGIEVERSORGUNGSSYSTEM

CAPACITIVE POWER SUPPLY SYSTEM

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **20.05.2008 FR 0853251**

(43) Date de publication de la demande:
**25.11.2009 Bulletin 2009/48**

(73) Titulaire: **Schneider Electric Industries SAS
92500 Rueil-Malmaison (FR)**

(72) Inventeurs:
• **Carcouet, Sébastien
38450 Vif (FR)**

• **Leonard, Didier
16290 Moulinars (FR)**

(74) Mandataire: **Dufresne, Thierry et al
Schneider Electric Industries SAS
Service Propriété Industrielle
35 rue Joseph Monier - CS 30323
92506 Rueil-Malmaison Cedex (FR)**

(56) Documents cités:
**JP-A- 2002 325 355     US-A1- 2005 213 273
US-A1- 2006 034 109**

EP 2 124 326 B1

## Description

La présente invention se rapporte à un système d'alimentation électrique de type capacitif.

Un système d'alimentation électrique destiné à alimenter une charge électrique C, comporte typiquement deux bornes d'entrée, une borne positive et une borne négative, connectées à un réseau d'alimentation appliquant une tension alternative, un module redresseur constitué par exemple d'un pont de diodes permettant de générer sur un bus continu une tension continue à partir de la tension alternative du réseau d'alimentation. Le système comporte en outre un condensateur de bus monté entre une ligne positive et une ligne négative du bus continu.

Lorsque le système d'alimentation est de type résistif, il comporte une résistance connectée à une borne d'entrée, en amont du module redresseur. Lorsque le système d'alimentation est de type capacitif, il comporte en amont du module redresseur un condensateur d'entrée C1 connecté en série à une borne d'entrée. Actuellement, en amont de ce condensateur d'entrée, un système d'alimentation de type capacitif comporte une résistance destinée à supporter le fort appel de courant créé au démarrage du système par le condensateur d'entrée.

Même si le rendement d'un système d'alimentation de type capacitif est meilleur que celui des systèmes d'alimentation résistifs, les systèmes d'alimentation capacitifs ont pour principal inconvénient d'être particulièrement volumineux. En effet le condensateur d'entrée doit être imposant pour tenir les surtensions réseaux. Par ailleurs, la résistance montée en série avec le condensateur d'entrée n'est utile que pour limiter le fort appel de courant au démarrage du système. Or, une fois le démarrage terminé, cette résistance chauffe et a tendance à dissiper beaucoup d'énergie.

Le document US2006/0034109 décrit un système selon le preambule de la revendication 1.

Le but de l'invention est de proposer un système d'alimentation de type capacitif qui soit simple, compact et dans lequel le fort appel de courant se produisant au démarrage est limité et les pertes par dissipation en fonctionnement normal réduites.

Ce but est atteint par un système selon la revendication 1.

Selon une particularité, les deux transistors semi-conducteurs du système sont de type JFET. Préférentiellement, les deux transistors semi-conducteurs du système sont fabriqués en carbure de silicium ou en nitrure de gallium.

Selon une autre particularité, les transistors semi-conducteurs du système sont montés tête-bêche, de telle sorte que le Drain d'un premier transistor semi-conducteur soit relié au réseau d'alimentation, le Drain d'un deuxième transistor semi-conducteur soit relié au condensateur d'entrée connecté en aval, les Sources des transistors semi-conducteurs soient reliées entre elles et les grilles des deux transistors semi-conducteurs soient également reliées entre elles et chacune rebouclée sur le potentiel commun des sources.

Par ailleurs, l'alimentation pourra comporter un ensemble d'éléments lui permettant de lutter efficacement contre les surtensions apparaissant sur le réseau d'alimentation, notamment celles induites par des chocs de foudre ou des manoeuvres de charges inductives ou capacitives. Le système d'alimentation électrique de type capacitif peut ainsi être protégé efficacement sans augmenter son encombrement.

Ainsi, le système peut comporter une diode transil bidirectionnelle ou une varistance connectée en aval des deux transistors semi-conducteurs et en amont du condensateur d'entrée, entre une ligne de courant connectée à la borne positive et une ligne de courant connectée à la borne négative.

De même, le système peut également comporter une résistance montée en parallèle des deux transistors semi-conducteurs.

D'autres caractéristiques et avantages vont apparaître dans la description détaillée qui suit en se référant à un mode de réalisation donné à titre d'exemple et représenté par les dessins annexés sur lesquels :

- la figure 1 représente un système d'alimentation de type capacitif selon l'invention,

- la figure 2 représente une amélioration du système d'alimentation de type capacitif de l'invention.

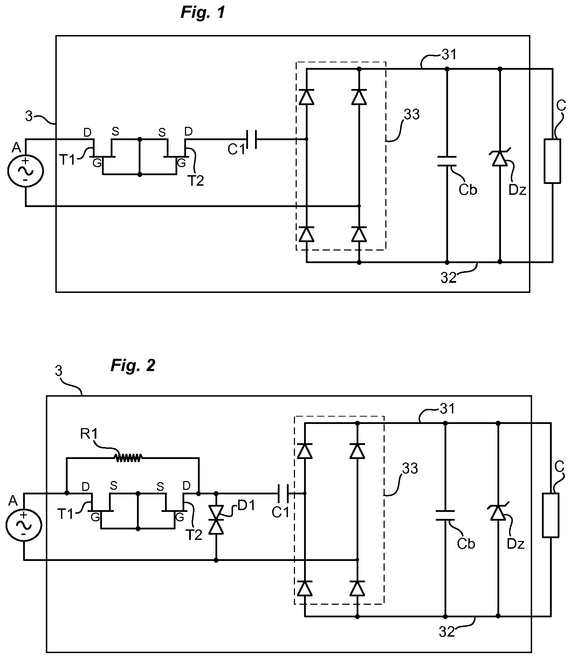

En référence à la figure 1, comme dans l'art antérieur, le système d'alimentation de l'invention est destiné à alimenter une charge électrique C et comporte deux bornes d'entrée, une borne positive et une borne négative, connectées à un réseau d'alimentation électrique A appliquant une tension alternative, par exemple égale à 230 Vac ou 400 Vac, générée à une fréquence qui est par exemple de 50Hz. Le système 3 comporte en outre un module redresseur 33 constitué par exemple d'un pont de diodes permettant de générer sur un bus continu une tension continue à partir de la tension alternative du réseau d'alimentation A, un condensateur de bus Cb monté entre une ligne positive 31 et une ligne négative 32 du bus continu, en aval du module redresseur 33, et un condensateur d'entrée C1 connecté d'une part à la borne positive et d'autre part à une branche du pont de diodes. Le système 3 peut également comporter des moyens pour limiter la tension fournie par le système d'alimentation, constitués par exemple d'une diode Zener Dz connectée entre la ligne positive 31 et la ligne négative 32 du bus continu, en aval du condensateur de bus Cb.

En lieu et place de la résistance d'entrée habituellement employée pour limiter le courant d'appel au démarrage, le système 3 de l'invention comporte deux transistors semi-conducteurs T1 et T2 bidirectionnels, par exemple identiques, montés en série et câblés en limiteur de courant. Ces deux transistors semi-conducteurs sont réalisés dans un matériau à grande énergie de bande interdite (appelé également "matériau à grand gap" ou "wide-band gap material"), comme par exemple le carbure de silicium ou le nitrure de gallium (GaN), ce qui leur confère une faible résistance à l'état passant $R_{DSon}$ et une capacité à supporter des tensions importantes (supérieures à 1000 V).

Ces transistors semi-conducteurs T1, T2 sont préférentiellement à jonctions, c'est-à-dire des transistors de type JFET ("Junction Field Effect Transistor"). Un transistor JFET est un composant électronique connu qui comporte une Grille de commande (G) dont la fonction est d'autoriser ou non le passage d'un courant entre un Drain (D) et une Source (S). Un tel transistor est dit de type normalement fermé (ou "normally ON") si la tension $V_{Gs}$ entre la Grille et la Source est proche de zéro. Cela signifie que le chemin Drain-Source est passant ou conducteur en l'absence de tension de commande $V_{GS}$. Inversement, un transistor JFET est dit du type normalement ouvert (ou "normally OFF") si le chemin Drain-Source n'est pas conducteur en l'absence de tension $V_{GS}$ entre Grille et Source. Dans l'invention, les transistors T1, T2 sont de type normalement fermé.

En référence à la figure 1, les transistors T1, T2 sont câblés en limiteur de courant et sont en série avec le condensateur d'entrée C1. Ils sont ainsi montés tête-bêche de telle sorte que le Drain (D) du transistor T1 soit relié au réseau alternatif A, le Drain (D) du transistor T2 soit relié au condensateur d'entrée C1, les Sources (S) des transistors T1, T2 soient reliées entre elles et les grilles des deux transistors soient également reliées entre elles et chacune rebouclée sur le potentiel commun des sources (S).

Ce montage présente ainsi l'avantage de protéger le système d'alimentation 3 des surintensités apparaissant à la mise sous tension, en limitant le courant de démarrage. En effet, au démarrage du système d'alimentation, la forte variation de tension vue par le condensateur d'entrée C1 entraîne un fort appel de courant à travers les deux transistors T1, T2. Lorsque l'intensité du courant augmente et devient supérieure à l'intensité du courant de limitation du transistor T1, le transistor T1 passe en limitation entraînant une augmentation de sa résistance interne. Comme sa résistance augmente, la tension aux bornes du transistor T1 augmente. Il en est de même pour le transistor T2. Ainsi, la forte variation de tension se produisant au démarrage est absorbée par les transistors. Par ailleurs, en fonctionnement normal, les résistances à l'état passant des deux transistors T1, T2 sont très faibles ce qui ne génère que de faibles pertes par dissipation.

En référence à la figure 2, il est également possible de protéger le système d'alimentation 3 contre les surtensions apparaissant sur le réseau d'alimentation A. Selon l'invention, pour protéger le système d'alimentation 3 contre les surtensions dues notamment à la foudre sur le réseau d'alimentation A, le système d'alimentation 3 comporte un écrêteur de type varistance ou diode transil D1 bidirectionnelle montée en aval du transistor T2 et en amont du condensateur d'entrée C1 entre la ligne de courant connectée à la borne positive et la ligne de courant connectée à la borne négative du système. La combinaison des deux transistors T1, T2 et de l'écrêteur, constitué par la diode D1 sur la figure 2, permet de protéger le système d'alimentation 3 contre des surtensions fortement énergétiques sans pénaliser le volume du dispositif. La diode transil D1 a pour objectif de fixer la tension maximale en sortie du système 3 et de fournir un chemin préférentiel au courant qui circule lors d'une surtension. On peut imaginer supprimer cette diode transil D1 dans le cas où le condensateur de bus Cb a une valeur telle que l'augmentation de tension générée à ses bornes lors d'une surtension ne dépasse pas la tension maximum admissible par le système d'alimentation 3.

Le fonctionnement en limitation de courant opéré par les transistors JFETs réduit par principe considérablement le courant provoqué par la surtension, et donc réduit par conséquent l'énergie absorbée par le système d'alimentation 3 comparé à un système d'alimentation conventionnel dépourvu de transistors. En fonction de la valeur de la surtension, l'énergie restant à dissiper se distribue entre la diode transil D1 et les deux transistors T1, T2 en série. Jusqu'à une valeur de surtension voisine de la tension d'écrêtage de la diode transil D1, l'essentiel de l'énergie est dissipé dans la transil. Pour les valeurs de surtensions plus élevées les transistors T1 et T2 prennent le relais pour dissiper l'énergie supplémentaire.

Le courant de limitation de chaque transistor T1, T2 est choisi de telle façon à pouvoir fournir le courant de démarrage nécessaire à la charge du système électronique 3. Pour optimiser la protection aux surtensions liées à la foudre, le courant de limitation est réduit au minimum requis pour le bon fonctionnement de la charge C ceci afin de réduire l'énergie à dissiper en cas de surtension, que ce soit dans chaque transistor T1, T2 ou dans la diode transil D1. Cependant, lorsque la surtension est provoquée par la commutation de charges inductives ou capacitives présentes sur le réseau d'alimentation A, une forte variation de tension apparaît à chaque manoeuvre. La tension de sortie du dispositif de l'invention étant fixée par la diode transil D1, tout le reste de la surtension est appliquée aux transistors T1, T2. Le courant selfique généré lors de la surtension de manoeuvre peut alors être bien supérieur au courant de limitation des transistors T1, T2. Dans ce cas, la tension aux bornes du dispositif 2 augmente fortement jusqu'à ce qu'un transistor T1, T2 entre en avalanche et ne limite donc plus le courant. L'énergie dissipée dans ce transistor est alors considérable et peut entrainer la destruction du composant.

Pour résoudre le problème des surtensions de manoeuvre, il est possible de dimensionner les transistors T1, T2 afin que ceux-ci puissent supporter l'énergie maximale. Cependant, cette solution est particulièrement coûteuse. En variante, il est possible de placer une résistance R1 correctement dimensionnée en parallèle des deux transistors JFETs afin de pouvoir y dissiper toute l'énergie générée par les surtensions de manoeuvre. Dans cette variante, chaque transistor T1, T2 peut donc rester de dimensions modestes et à un coût raisonnable. La résistance R1 montée en parallèle devra donc être dimensionnée de manière à limiter la tension audessous de la tension maximale supportée par les transistors T1, T2.

Il est à noter que la caractéristique de limitation en courant des transistors JFETs dépend de la température. Pendant la montée en tension de la surtension, on observe d'abord une dissipation dans la diode transil D1 puis dans les transistors T1, T2 entraînant un échauffement progressif des transistors et donc un abaissement du niveau de limitation du courant. En présence d'une surtension due à la foudre, cet effet d'échauffement est favorable en ce sens qu'il permet de limiter l'énergie à dissiper, puisque le courant dans les JFETs et dans la diode transil D1 est lui-même limité. En revanche, en présence d'une surtension de manoeuvre et d'un courant selfique, le courant ne peut s'écouler à travers les JFETs, ce qui entraîne une montée rapide de la tension jusqu'à atteindre la valeur seuil d'avalanche des JFETs à partir de laquelle le courant peut traverser les transistors JFETs sans limitation. Selon l'invention, la résistance R1 câblée en parallèle par rapport aux JFETs constitue alors un chemin emprunté par le courant selfique dès l'instant que l'équation ci-dessous est vérifiée :

$$U_{max}= (I_{max}-I_{limJFET})xR1$$

Ainsi selon la valeur maximale de Imax (courant selfique) il est possible de définir une résistance R1 telle que Umax soit inférieur à $U_{JFETbr}$, de manière à éviter l'entrée en avalanche des JFETs. La sensibilité en température des JFETs permet alors de favoriser le transfert de la dissipation d'énergie vers la résistance R1, ce qui améliore la robustesse du dispositif.

Exemple de dimensionnement :

Charge inductive sur le réseau de 300VA avec Imax=1,8 A
Courant de limitation d'un transistor JFET : IlimJFET=0,1 A
Tenue en tension maximale d'un transistor JFET : $U_{JFETbr}$=2000V
On obtient R1=UJFETbr/(Imax-IlimJFET)=1176 Ohms

## Revendications

1. Système d'alimentation électrique (3) destiné à alimenter une charge électrique (C), le système comprenant :

   - deux bornes d'entrée respectivement négative et positive, connectées à un réseau d'alimentation (A) fournissant une tension alternative,
   - un condensateur d'entrée (C1) connecté à l'une des bornes du système,
   - un module redresseur (33) pour générer sur un bus continu une tension continue à partir de la tension alternative,
   - un condensateur de bus (Cb) connecté entre une ligne positive (31) et une ligne négative (32) du bus continu,

   **caractérisé en ce que** :

   - le système comprend en série avec le condensateur d'entrée (C1) et en amont de celui-ci, deux transistors semi-conducteurs (T1, T2) bidirectionnels de type normalement fermé, montés en série, fabriqués dans un matériau à grande énergie de bande interdite et pouvant fonctionner en limitation de courant,
   - les transistors semi-conducteurs (T1, T2) étant de type JFET et montés tête-bêche, de telle sorte que le Drain (D) d'un premier transistor semiconducteur (T1) soit relié au réseau d'alimentation (A), le Drain (D) d'un deuxième transistor semi-conducteur (T2) soit relié au condensateur d'entrée (C1) connecté en aval, les Sources (S) des transistors semi-conducteurs (T1, T2) soient reliées entre elles et les grilles (G) des deux transistors semi-conducteurs (T1, T2) soient également reliées entre elles et chacune rebouclée sur le potentiel commun des sources (S).

2. Système selon la revendication 1, **caractérisé en ce que** les deux transistors semi-conducteurs (T1, T2) sont fabriqués en carbure de silicium ou en nitrure de gallium.

3. Système selon la revendication 1 ou 2, **caractérisé en ce qu'**il comporte une diode transil (D1) bidirectionnelle ou une varistance connectée en aval des deux transistors semi-conducteurs (T1, T2) et en amont du condensateur d'entrée (C1), entre une ligne de courant connectée à la borne positive et une ligne de courant connectée à la borne négative.

4. Système selon l'une des revendications 1 à 3, **caractérisé en ce que** le système comporte une résistance (R1) montée en parallèle des deux transistors semi-conducteurs (T1, T2).

**Patentansprüche**

1. Energieversorgungssystem (3), das dazu bestimmt ist, eine elektrische Last (C) zu speisen, wobei das System Folgendes aufweist:

   - zwei Eingangsklemmen, jeweils eine negative und eine positive, die an ein Versorgungsnetz (A) angeschlossen sind, das eine Wechselspannung liefert,
   - einen Eingangskondensator (C1), der an eine der Klemmen des Systems angeschlossen ist,
   - ein Gleichrichtermodul (33), um auf einem Gleichstrombus ausgehend von der Wechselspannung eine Gleichspannung zu erzeugen,
   - einen Buskondensator (Cb), der zwischen einer positiven Leitung (31) und einer negativen Leitung (32) des Gleichstrombusses angeschlossen ist,

   **dadurch gekennzeichnet, dass**:

   - das System in Reihe mit dem Eingangskondensator (C1) und diesem vorgelagert zwei bidirektionale Halbleitertransistoren (T1, T2) vom normalerweise geschlossenen Typ aufweist, die in Reihe geschaltet sind, die aus einem Hochenergie-Bandlücken-Material hergestellt sind und in Strombegrenzung funktionieren können,
   - wobei die Halbleitertransistoren (T1, T2) des Typs der JFETs sind und derart entgegengesetzt montiert sind, dass der Drain (D) eines ersten Halbleitertransistors (T1) mit dem Versorgungsnetz (A) verbunden ist, der Drain (D) eines zweiten Halbleitertransistors (T2) mit dem Eingangskondensator (C1), der nachgelagert angeschlossen ist, verbunden ist, die Quellen (S) der Halbleitertransistoren (T1, T2) miteinander verbunden sind und die Gates (G) der zwei Halbleitertransistoren (T1, T2) ebenfalls miteinander verbunden sind und jeweils auf dem gemeinsamen Potential der Quellen (S) zurückgeschleift sind.

2. System nach Anspruch 1, **dadurch gekennzeichnet, dass** die zwei Halbleitertransistoren (T1, T2) aus Siliziumkarbid oder Galliumnitrid hergestellt sind.

3. System nach Anspruch 1 oder 2, **dadurch gekennzeichnet, dass** es eine bidirektionale Transildiode (D1) oder einen Varistor aufweist, die oder der den zwei Halbleitertransistoren (T1, T2) nachgelagert und dem Eingangskondensator (C1) vorgelagert zwischen einer Stromleitung, die an die positive Klemme angeschlossen ist, und einer Stromleitung, die an die negative Klemme angeschlossen ist, angeschlossen ist.

4. System nach einem der Ansprüche 1 bis 3, **dadurch gekennzeichnet, dass** das System einen Widerstand (R1) aufweist, der parallel zu den zwei Halbleitertransistoren (T1, T2) geschaltet ist.

**Claims**

1. Power supply system (3) intended to supply power to an electrical load (C), the system comprising:

   - two input terminals, namely a negative terminal and a positive terminal, connected to supply mains (A) delivering an AC voltage;
   - an input capacitor (C1) connected to one of the terminals of the system;
   - a rectifier module (33) for generating a DC voltage on a DC bus from the AC voltage; and
   - a bus capacitor (Cb) connected between a positive line (31) and a negative line (32) of the DC bus,

   **characterized in that**:

   - the system includes, in series with the input capacitor (C1) and upstream thereof, two normally-on bidirectional semiconductor transistors (T1, T2) connected in series, fabricated in a wide-bandgap material and able to operate in current-limiting mode,
   - the semiconductor transistors (T1, T2) being of the JFET type and connected back to back in such a way that the drain (D) of a first semiconductor transistor (T1) is connected to the supply mains (A), the drain (D) of a second semiconductor transistor (T2) is connected to the input capacitor (C1) connected downstream, the sources (S) of the semiconductor transistors (T1, T2) are connected together, and the gates (G) of the two semiconductor transistors (T1, T2) are also connected together and each is looped back onto the common potential of the sources (S).

2. System according to Claim 1, **characterized in that** the two semiconductor transistors (T1, T2) are fabricated in silicon carbide or in gallium nitride.

3. System according to Claim 1 or 2, **characterized in that** it includes a bidirectional transil diode (D1) or a varistor connected downstream of the two semiconductor transistors (T1, T2) and upstream of the input capacitor (C1), between a current line connected to the positive terminal and a current line connected to the negative terminal.

4. System according to one of Claims 1 to 3, **characterized in that** the system includes a resistor (R1) connected in parallel with the two semiconductor transistors (T1, T2).

*Fig. 1*

*Fig. 2*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20060034109 A **[0005]**